Europäisches Patentamt

European Patent Office

Office européen des brevets

(11) Veröffentlichungsnummer: **0 291 827**
**A2**

# (12) EUROPÄISCHE PATENTANMELDUNG

(21) Anmeldenummer: 88107539.4

(22) Anmeldetag: 11.05.88

(51) Int. Cl.4: **B60R 11/02**

(30) Priorität: 21.05.87 DE 3717054

(43) Veröffentlichungstag der Anmeldung:
23.11.88 Patentblatt 88/47

(84) Benannte Vertragsstaaten:
**AT CH DE ES FR IT LI**

(71) Anmelder: **Blaupunkt-Werke GmbH**
**Robert-Bosch-Strasse 200**
**D-3200 Hildesheim(DE)**

(72) Erfinder: **Seibold, Peter**
**Lehmkamp 33 D**
**D-3201 Diekholzen(DE)**

(74) Vertreter: **Eilers, Norbert, Dipl.-Phys.**
**Blaupunkt-Werke GmbH**
**Robert-Bosch-Strasse 200**
**D-3200 Hildesheim(DE)**

(54) Autoradio mit einer elektronischen Diebstahlsicherung.

(57) Es wird ein Autoradio mit einer elektronischen Sicherung gegen Diebstahl vorgeschlagen mit einem Speicher für ein Codewort, Mitteln zur Eingabe des Codewortes, Mitteln zur elektrischen Erfassung der Entnahme des Gerätes aus seinem Einbauort und Mitteln zur Verhinderung der Funktion des Gerätes, solange nach seiner Entnahme das Codewort nicht eingegeben wurde.

Zur elektrischen Erfassung der Entnahme des Gerätes aus seinem Einbauort wird die Impedanz an einer Klemme (z. B. Lautsprecheranschlußklemme) des Autoradios gemessen und ihr Wert gespeichert. Zu Beginn jeder neuen Inbetriebnahme wird der Impedanzwert neu gemessen und mit dem gespeicherten Wert verglichen. Bei einer signifikanten Abweichung wird die Funktion des Autoradios verhindert.

Fig. 1

EP 0 291 827 A2

## Autoradio mit einer elektronischen Diebstahlsicherung

Die Erfindung betrifft ein Autoradio mit einer elektronischen Diebstahlsicherung nach dem Oberbegriff des Patentanspruchs 1.

Autoradios sind häufig Gegenstand von Diebstählen, insbesondere aus geparkten Kraftfahrzeugen. Zur Erschwerung derartiger Diebstähle werden sowohl mechanische als auch elektronische Sicherungsvorkehrungen getroffen.

Aus der DE-OS 35 09 562 ist ein System zur Sicherung von Autoradios gegen Diebstahl bekannt mit einem Speicher für ein Codewort, Mitteln zur Eingabe des Codewortes, Mitteln zur elektronischen Erfassung der Entnahme des Gerätes aus seinem Einbauort und Mitteln zur Verhinderung der Funktion des Gerätes, solange nach einer Entnahme das Codewort nicht eingegeben wurde. Dadurch wird die Inbetriebnahme nach einem Ausbau des Gerätes ohne Eingabe des Codewortes unmöglich gemacht. Eine Anordnung zur Erfassung der Entnahme des Gerätes, die auf eine Unterbrechung der permanenten Stromversorgung anspricht, ist jedoch durch ein vorheriges Anklemmen einer zusätzlichen Batterie überlistbar. Eine Anordnung zur Erfassung der Entnahme mittels eines Potentiometers, welche derart im Gerät angeordnet ist, daß es sowohl nach einer Entnahme als auch nach einem Wiedereinbau in einem anderen Einbauort nicht die ursprüngliche Stellung aufweist, erfordert eine hohe mechanische Präzision und ist relativ aufwendig.

Der Erfindung liegt die Aufgabe zugrunde, ein Autoradio mit einer rein elektronischen Diebstahlsicherung zu schaffen, die mit einer zusätzlich angeklemmten Batterie nicht zu überlisten ist.

Diese Aufgabe wird bei einem gattungsgemäßen Autoradio durch die kennzeichnenden Merkmale des Anspruchs 1 gelöst.

Weitere vorteilhafte Ausgestaltungen der Erfindung sind in den Unteransprüchen beschrieben.

Die mit der Erfindung erzielten Vorteile bestehen insbesondere darin, daß das Autoradio weder eine permanente Stromversorgung noch eine elektromechanische Abtastvorrichtung benötigt, da lediglich an Klemmen des Gerätes vorhandene einbauspezifische elektrische Größen meßtechnisch erfaßt und ausgewertet werden.

Ein Ausführungsbeispiel der Erfindung ist in der Zeichnung dargestellt und wird im folgenden näher beschrieben.

Es zeigen

Fig. 1 ein Blockschaltbild eines Autoradios mit einer elektronischen Diebstahlsicherung,

Fig. 2 eine erste Schaltungsanordnung zur Impedanzmessung und

Fig. 3 eine weitere Schaltungsanordnung zur Impedanzmessung an einer Lautsprecherklemme des Autoradios.

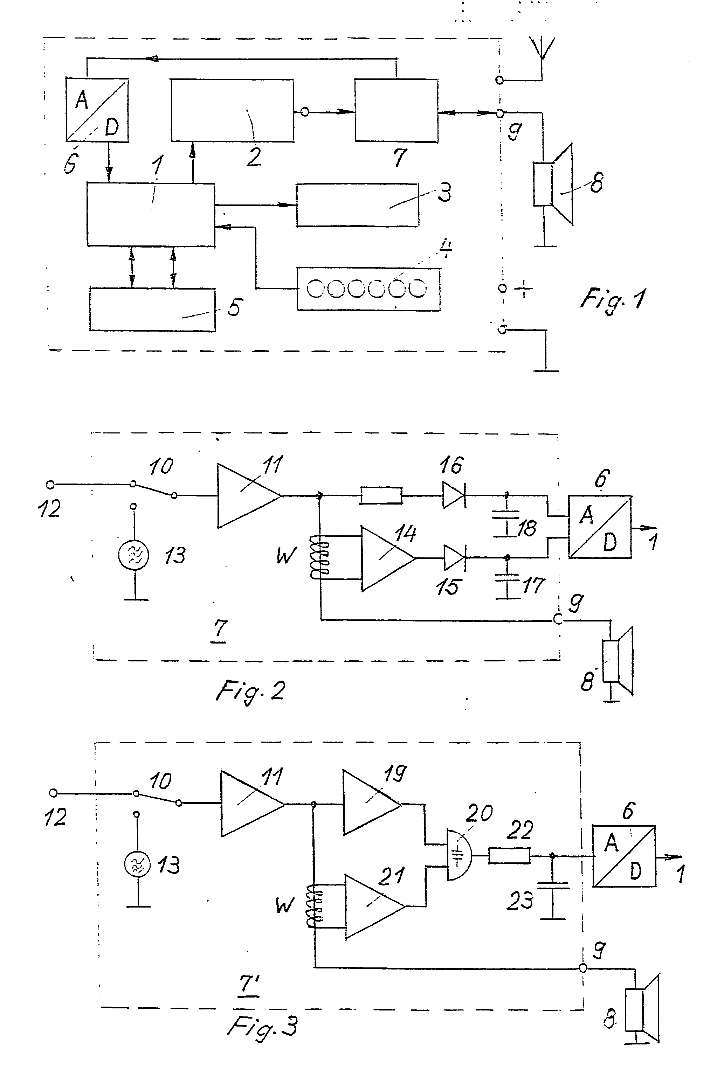

In einem Autoradio nach Figur 1 ist ein Mikroprozessor 1 angeordnet, mit dessen Hilfe die erfindungsgemäße Diebstahlsicherung aber auch andere Funktionen, wie beispielsweise die digitale Abstimmung gesteuert werden. Die zwar mit den Mikroprozessor 1 verbundenen, jedoch für das Verständnis der Erfindung nicht notwendigen Teile eines Autoradios sind deshalb in einem Block 2 zusammengefaßt dargestellt.

An den Mikroprozessor 1 sind ferner angeschlossen: Eine alphanumerische Anzeigevorrichtung (Display) 3, Bedienelemente des Autoradios, von denen hier lediglich Stationstasten 4 dargestellt sind und ein nichtflüchtiger, elektrisch löschbarer Speicher (EAROM) 5. Ferner ist über einen Analog-Digital-Wandler 6 eine Schaltungsanordnung 7 angeschlossen, die beim Einschalten des Gerätes die Impedanz an einer mit einem Lautsprecher 8 verbundenen Anschlußklemme (9) des Gerätes mißt.

Nach dem Einbau des Autoradios wird in an sich bekannter Weise mittels der Tasten 4 das Codewort eingegeben. Gleichzeitig wird der an der Lautsprecherklemme vorhandene Impedanzwert als digitaler Wert in den Speicher 5 eingeschrieben. Dazu wird der mit der Schaltungsanordnung 7 ermittelte Impedanzwert dem A/D-Wandler 6 zugeführt, dessen digitales Ausgangssignal vom Mikroprozessor 1 abgefragt und in den Speicher 5 eingeschrieben wird.

Bei erneuter Inbetriebnahme wird vom Mikroprozessor 1 der an der Lautspecherklemme (9) vorhandene Impedanzwert mit dem bei der ersten Inbetriebnahme im Speicher 5 abgelegten Impedanzwert verglichen. Bei Übereinstimmung wird der Betrieb des Autoradios aufgenommen. Bei Nichtübereinstimmung, beispielsweise beim Anschluß anderer Lautsprecher, wird die Funktion des Autoradios verhindert und der Benutzer über die Anzeigevorrichtung 3 zur Eingabe des Codewortes aufgefordert. Dadurch wird erreicht, daß im Falle einer berechtigten Entnahme des Autoradios aus dem Fahrzeug die Wiederaufnahme des Betriebes durch die Eingabe des Codewortes möglich ist.

Ist ein falsches Codewort eingegeben worden, so wird die Eingabe für mehrere Sekunden gesperrt, wonach ein erneuter Versuch zur Eingabe des Codewortes unternommen werden kann. Diese Sperrzeit kann für jeden darauffolgenden Versuch vergrößert werden, wodurch ein Ermitteln des Codewortes durch Ausprobieren verhindert wird.

Eine Schaltungsanordnung nach Figur 2 zur Messung der Impedanz an der Lautsprecherklemme 9 zeigt einen Umschalter 10, der in seiner Ruhestellung den Eingang des NF-Verstärkers 11 mit dem Demodulatorausgang 12 des Autoradios und in seiner Arbeitsstellung mit einem Wechselspannungsgenerator 13 verbindet. Der Ausgang des NF-Verstärkers 11 ist über einen Stromwandler W mit der Anschlußklemme 9 für den Lautsprecher 8 verbunden. Der Ausgang des Stromwandlers W ist mit dem Eingang eines Meßverstärkers 14 verbunden, dessen Ausgang über eine Diode 15 mit einem Eingang des Analog-Digital-Wandlers 6 verbunden ist. Die Anschlußklemme 9 für den Lautsprecher 8 ist zudem über eine weitere Diode 16 mit einem Eingang des Analog-Digital-Wandlers 6 verbunden. Den Dioden sind jeweils Siebkondensatoren 17, 18 nachgeschaltet. Während des Meßvorgangs wird vom Wechselspannungsgenerator 13 ein 40 kHz-Signal über den Verstärker 11 an den Lautsprecher 8 gelegt. Aus dem den Lautsprecher 8 durchfließenden Strom und aus der am Lautsprecher anliegenden Spannung wird die Meßgröße für den Wert der Lautsprecherimpedanz gewonnen.

Eine weitere Schaltungsanordnung nach Figur 3 zur Messung der Impedanz an der Lautsprecherklemme 9 zeigt in gleicher Weise geschaltet einen Umschalter 10, einen Wechselspannungsgenerator 13, einen NF-Verstärker 11 und einen Stromwandler W. Die Anschlußklemme 9 für den Lautsprecher 8 ist über einen ersten Begrenzerverstärker 19 mit einem Eingang eines als Phasendiskriminator geschalteten Exklusiv-ODER-Gatters 20 verbunden. Der Ausgang des Stromwandlers W ist über einen zweiten Begrenzerverstärker 21 mit dem zweiten eingang des Exlkusiv-ODER-Gatters 20 verbunden, dessen Ausgang über ein aus einem Widerstand 22 und einem Kondensator 23 bestehendes, als Phasen/Spannungs-Wandler wirkendes Siebglied mit einem Eingang des Analog-Digital-Wandlers 6 verbunden ist. In den Begrenzerverstärkern 19, 21 werden Strom und Spannung begrenzt. Die entstehenden Rechtecksignale werden durch den Phasendiskriminator in eine phasen proportionale Gleichspannung umgestezt. Diese Spannung ist abhängig vom Impedanzwert des angeschlossenen Lautsprechers.

Die Messung der Impedanz ist nicht auf die Lautsprecherklemmen beschränkt. Sie ist bei allen Klemmen eines Autoradios anwendbar, an denen der Impedanzwert nach einem Ausbau und/oder Neueinbau des Autoradios signifikant vom zuvor gespeicherten Wert abweicht.

## Ansprüche

1. Autoradio mit einer elektronischen Diebstahlsicherung, die einen Speicher für ein Codewort, Mittel zur Eingabe des Codewortes sowie Mittel zur elektrischen Erfassung einer Entnahme des Autoradios aus seinen Einbauort aufweist, welche die Funktion des Autoradios verhindern, solange nach der Entnahme das Codewort nicht eingegeben wurde, dadurch gekennzeichnet, daß eine Schaltungsanordnung (7, 7') vorgesehen ist, die beim Einschalten des Gerätes die Impedanz an mindestens einer Anschlußklemme (9) des Autoradios mißt, den gemessenen Impedanzwert mit dem zuvor am Einbauort ermittelten gespeicherten Impedanzwert vergleicht und beim Auftreten unterschiedlicher Werte die Funktion des Autoradios in an sich bekannter Weise bis zur Eingabe des richtigen Codewortes unterbindet.

2. Autoradio mit einer elektronischen Diebstahlsicherung nach Anspruch 1, dadurch gekennzeichnet, daß die Impedanzmessung an mindestens einer Lautsprecheranschlußklemme (9) erfolgt.

3. Autoradio mit einer elektronischen Diebstahlsicherung nach Anspruch 2, dadurch gekennzeichnet, daß zur Messung der Impedanz ein in einem Wechselspannungsgenerator (13) erzeugtes Signal über einen Schalter (10) an die Lautsprecheranschlußklemme (9) gelegt wird.

4. Autoradio mit einer elektronischen Diebstahlsicherung nach Anspruch 3, dadurch gekennzeichnet, daß der Impedanzwert an der Lautsprecheranschlußklemme (9) aus der Meßspannung an der Lautsprecheranschlußklemme (9) und aus einer weiteren Meßspannung, die aus dem im Lautsprecherkreis fleißenden Wechselstrom abgeleitet ist, ermittelt wird.

5. Autoradio mit einer elektronischen Diebstahlsicherung nach Anspruch 4, dadurch gekennzeichnet, daß die an der Lautsprecheranschlußklemme (9) anliegende Meßspannung und die aus dem im Lautsprecherkreis fließenden Strom abgeleitete weitere Meßspannung über je eine Begrenzerstufe (19, 21) einem Phasendiskriminator (20) zugeführt werden, der die Meßwerte in eine phasenproportio-nale Gleichspannung umsetzt.

Fig. 1

Fig. 2

Fig. 3